# EUROPEAN PATENT SPECIFICATION

(11) **EP 3 379 931 B1**
(45) Date of publication and mention of the grant of the patent: **17.07.2024**
(21) Application number: 16869006.3
(22) Date of filing: 24.05.2016
(51) Int. Cl.: C08G 73/00, C08L 101/00, A01N 33/12, A01N 25/10, A01N 31/02, A01N 25/24

(54) **SURFACE DISINFECTANT WITH RESIDUAL BIOCIDAL PROPERTY**
OBERFLÄCHENDESINFEKTIONSMITTEL MIT VERBLEIBENDEN BIOZIDEN EIGENSCHAFTEN
DÉSINFECTANT DE SURFACE AYANT UNE PROPRIÉTÉ BIOCIDE RÉSIDUELLE

(30) Priority: 23.11.2015 US 201514948962; 23.05.2016 US 201615162068
(43) Date of publication of application: 03.10.2018
(73) Proprietor: MICROBAN PRODUCTS COMPANY, Huntersville, NC 28078 (US)
(72) Inventor: LAN, Tian, Huntersville, North Carolina 28078 (US); HANNA, Samuel James, Charlotte, North Carolina 28210 (US); SLOAN, Gina Parise, Statesville, North Carolina 28625 (US); AYLWARD, Brian Patrick, Concord, North Carolina 28027 (US); WELCH, Karen Terry, Kannapolis, North Carolina 28081 (US); SHIREMAN, Dennis Earl, Marion, Arkansas 72364 (US); KAVCHOK, Kevin Andrew, Charlotte, North Carolina 28269 (US); HAWES, Charles L., Cordova, Tennessee 38016 (US)
(74) Representative: Boult Wade Tennant LLP
(86) International application number: PCT/US2016/033889
(87) International publication number: WO 2017/091250

(56) References cited:
- WO-A1-2008/049616
- WO-A1-2012/149591
- WO-A1-2012/149591
- WO-A1-2013/098547
- WO-A1-2015/078496
- WO-A1-2016/086014
- WO-A1-99/35227
- CN-A- 102 965 214
- FR-A1- 2 994 095
- JP-B2- H0 776 113
- US-A- 4 481 167
- US-A- 4 990 339
- US-A- 5 183 601
- US-A- 5 654 154
- US-A- 5 932 253
- US-A- 6 106 820
- US-A1- 2007 231 291
- US-A1- 2007 254 979
- US-A1- 2009 087 393
- US-A1- 2012 045 583
- US-A1- 2012 183 606
- US-A1- 2014 080 977
- US-A1- 2014 170 197
- US-B1- 6 194 075
- US-B1- 6 458 906
- WASCHINSKI C J ET AL: "Poly(oxazoline)s with Telechelic Antimicrobial Functions", BIOMACROMOLECULES, AMERICAN CHEMICAL SOCIETY, vol. 6, 1 January 2005 (2005-01-01), pages 235 - 243, XP002405168, ISSN: 1525-7797, DOI: 10.1021/BM049553I

## Description

### FIELD OF THE INVENTION

The present invention relates to the field of disinfectant formulations, and more specifically, to a disinfectant formulation imparting a residual biocidal property.

### BACKGROUND OF THE INVENTION

Microbes exist everywhere in the modern world. While some are beneficial to humans and the environment, others may have significant negative consequences for contaminated articles as well as the persons, animals and ecological members coming in contact with them. There are a number of industries and environments where such microbes are especially prevalent.

### Healthcare

A hospital-acquired infection (HAI; alternatively a "nosocomial infection") is an infection whose development is favored by a hospital or healthcare environment. Such maladies typically are fungal or bacterial infections and can afflict the victim locally or systemically. Nosocomial infections can cause severe pneumonia as well as infections of the urinary tract, bloodstream, and other parts of the body.

Nosocomial infections have severe medical implications for patients and care providers. In the United States, data suggest that approximately 1.7 million instances of hospital-associated infections occur each year, with nearly 100,000 deaths resulting therefrom. European data and surveys indicate Gram-negative bacterial infections alone account for 8,000-10,000 deaths each year.

Several aggravating factors contribute to the high HAI rate. Hospitals, urgent care centers, nursing homes, and similar facilities focus their treatments on those with serious illnesses and injuries. As a result, these facilities house abnormally highly concentrated populations of patients with weakened immune systems.

A trio of pathogens is commonly found in healthcare settings and together account for approximately one-third of nosocomial infections: coagulase-negative *Staphylococci* (15%), *Candida* species (11%), and *Escherichia coli* (10%).

Worse, it is the more robust disease-causing pathogens that are present in such environments. The six so-called "ESKAPE pathogens" - *Enterococcus faecium, Staphylococcus aureus, Klebsiella pneumoniae, Acinetobacter baumannii, Pseudomonas aeruginosa,* and *Enterobacter* species - possess antibiotic resistance and are implicated in nearly half of all nosocomial infections. Their resistance to one or more biocidal agents makes such infections particularly dangerous.

In particular, the broad nutritional versatility of *Pseudomonas* permits its survival in extreme environments, including survival on surfaces not intensively cleaned and sterilized. This pathogen's ubiquity in the hospital environment makes it a leading cause of Gram-negative nosocomial infections. Particularly vulnerable are immune-compromised patients (e.g. those afflicted with cystic fibrosis, cancer, or burns).

The most common means of HAIs is through direct or indirect contact transmission. Direct contact transmission involves a patient contacting either a contaminated patient or worker. As care providers move through the healthcare institution, they come into contact with its many patients. These workers unwittingly act in a manner analogous to bees in a garden, "pollinating" rooms and wards as they care for residents.

Indirect contact transmission occurs when the patient contacts a contaminated object or surface. The healthcare environment presents an array of articles capable of passively vectoring pathogens.

Nosocomial infections further deal a serious blow to the volume, quality, and cost of healthcare provided by hospitals and other institutions. In addition to the roughly 100,000 HAI-related deaths occurring annually in the United States, an estimated two million more victims are forced to endure the physical ravages and emotional distress associated with these serious and avoidable illnesses.

Institutions have reacted by creating policies to impose more stringent cleanliness and disinfection requirements upon staff and the patient environment. These programs typically include frequent hand-washing and frequent disinfection of surfaces. Despite implementation of programs to curb nosocomial infections, infections still occur at unacceptably high rates.

### Home care and Household

Household environments also face microbes. A main disadvantage associated with consumer disinfectants and sanitizers is that, while they can be effective at initially killing microbes, the surface is easily and quickly re-contaminated through contact, airborne microbes, and un-killed residual microbes before treatment. While some of the disinfectants would continue to offer some control if simply left on the surface, this would result in a greasy or tacky residue that would be easily negated by casual contact with the surface. Thus, there is a desire for a home care and household cleaner that kills microbes quickly on contact, then acts as a residual disinfectant but yet does not have this undesirable sticky or tacky effect. Such cleaners may be useful for general purpose household cleaning, bathroom cleaning, and spray protectants.

A difference between hospital and healthcare cleaners and household products is the allowable VOC (volatile organic content). The regulations for most non-aerosol household consumer disinfectants are a maximum of 1% VOC.

### Food Service

The food service industry also faces outbreaks in contamination of pathogens in the workplace and spreading disease out to consumers. Even though food manufacturers adopt vigorous hygiene plans and comply with tight government hygiene regulations, major outbreaks of microbes are still reported occasionally that causes serious illness among consumers. Disinfectants with residual activities should effectively alleviate the issue.

### Biofilm

A biofilm is generally defined as a layer of microorganisms adhering to the surface of a structure, which may be organic or inorganic, that secrete a protective coating that is biological in origin. Biofilms present a large problem for public health because of increased resistance of biofilm-associated organisms to antimicrobial agents and for the potential of biofilm borne organisms to cause infections. Thus, there is a need for a solution to disinfection with regard to biofilms. Current disinfectants do not have the ability to kill biofilms or to seal or lock-in biofilms on surfaces to prevent cross-contamination events and to prevent out growth. There are limited solutions for surface biofilm problems. For example, there is a building body of evidence that surface biofilms pose a problem in the healthcare setting for the above mentioned reasons. In addition, biofilms are a recognized problem of possible contamination within the food industry. Other industries face similar concerns. Thus, there is a need for a solution targeted at potential biofilm problem areas that can be used to eradicate biofilms.

US4481167 relates to complexes comprising (a) a poly-2-oxazoline or poly-2-oxazine, such as the homopolymers of polymerized 2-ethyl-2-oxazoline or 2-ethyl-2-oxazine, and (b) IBrCl- or polyhalide anion of the formula (XY₂ₙ)-where X and Y are individually chloride, bromide or iodide, but not both chloride, and n is 1, 2 or 3, and an independently supplied cation selected from the group consisting of alkali metals, alkaline earth metals, hydrogen and mixtures thereof. These complexes are readily prepared in either an aqueous or anhydrous environment at room temperature. US 2009/087393 relates to a formable dental treatment tray utilizing poly(2-ethyl-2-oxazoline) and a gelatinous active. Blending of the active is accomplished by mixing the poly(2-ethyl-2-oxazoline) with an active ingredient, such as a peroxide like hydrogen peroxide, carbamide peroxide, sodium perborate, or sodium percarbonate, usually also with water or an appropriate organic solvent. US 4990339 relates to a water soluble dermal treatment film for dressing burns, surface wounds, cuts, scrapes, rashes or other dermal wound or lesion comprises a flexible sheet-like dressing made of polyalkyloxazoline. The dressing can have a structural layer and a pressure sensitive adhesive layer. US 5654154 relates to chemiluminescent bioassays for the presence or concentration of an analyte in a sample using 1,2-dioxetanes as substrates for the enzyme of an enzyme complex that bind to the analyte. The chemiluminescence obtained from the decomposition of the dioxetane triggered by the enzyme through the formation of the corresponding 1,2-dioxetane oxyanion of the enzyme complex is enhanced by the addition of TBQ as an enhancement agent. US 5932253 relates to compositions and processes which incorporate water-soluble polymers, other than enzymes, containing =N-C(=O)- (including PVP) and/or N-oxide groups into the wash, rinse, and/or drying cycle of a laundering process (e.g., via fabric softening compositions) for dye transfer inhibition in the subsequent wash cycle. CN102965214 relates to a cleaning composition which can endow the surface of a substrate with hydrophilicity. The composition includes: 0.0001-5wt% of at least one water-soluble high molecular compound selected from the group composed of polyvinyl alcohol, polyethylene glycol (PEG), cellulose, polyacrylic acid (PAA), polyethyloxazoline and polyvinylpyrrolidone; 0.01-5wt% of a polyol compound; 0.05-10wt% of quaternary ammonium hydroxide; 0.05-40wt% of a glycol ether-based solvent expressed by the following molecular formula; and the balance water.

JP H07 76113 relates to producing a glass flake by using a processing agent containing an adhesive (polyvinyl acetate, etc.) and a coupling agent (gamma-aminopropyltrimethoxysilane, etc.) which is diluted with water, etc., and the soln. is coated on the surface of a glass flake and dried. At this time, the mixing weight ratio of the adhesive to the coupling agent is preferably controlled to 1/1-50/1, and 0.1-3.0pts.wt. adhesive and 0.05- 1.0 pts. wt. coupling agent are preferably added to 100pts.wt. glass flake.
US 6194075 relates to a water insoluble absorbent coating material comprising a water-insoluble network prepared by combining at least one silicon-containing monomer, at least one water- and solvent-soluble polymer, and, optionally, at least one acidic catalytic component, is provided. A water-insoluble absorbent coating material suitable for use as an ink receptive coating layer in an ink jet film is also provided as are ink jet recording media containing such ink receptive coating layers. US 2012/045583 relates to a process for printing a high resolution pattern on a photopolymeric surface. Waschinski C. J et al. "Poly(oxazoline)s with Telechelic Antimicrobial Functions", Biomacromolecules, American Chemical Society, vol. 6, pages 235-243, relates to Poly(2-alkyl-1,3-oxazoline)s with terminal quaternary ammonium groups, their synthesis and an investigation of their antimicrobial potential. US 2012/183606 relates to drug delivery systems comprising a water-soluble polymer matrix and a bioactive agent entrained therein, said water soluble polymer matrix containing at least 50 wt. % of polyoxazoline having a molar mass of at least 5 40,000 g/mol. The drug delivery system can be in the form of a solid dispersion, a mucoadhesive sheet, a tablet, a powder, a capsule. US 6458906 relates to water or alcohol soluble or dispersible thermoplastic elastomeric copolymers and to cosmetic and pharmaceutical compositions containing these copolymers.

US 5183601 relates to a detergent composition comprising: (1) a surface active agent or a water-soluble polymeric compound and (2) a polymer which contains recurring units (I-1) and (I-2). WO 2012/149591 relates to the use of a compound of the formula (I) as a contact biocide, where A is a fragment which coordinates as a cation to the lone pair of electrons on a nitrogen atom, B a fragment which reacts as an anion with a carbocation to form an uncharged product, R an organic radical consisting of a saturated aliphatic chain C6 to C30, a saturated cycloaliphatic radical, a mono- or polyunsaturated aliphatic chain with at least 6 carbon atoms, an alkyl spacer to be crosslinked oligooxazolines, an aryl spacer to crosslinking oligooxazolines, a phenyl, a heteroalkylphenyl, a copolymer thereof and X are a biocidally inactive anion and where (n + m)> 10. US 2014/170197 relates to polymer aggregates as delivery vehicles for therapeutics and diagnostics. US 6106820 relates to cosmetic compositions comprising: (a) from about 0.1% to about 50%, based on the weight of the composition, of a film-forming graft copolymer, wherein the copolymer comprises: (i) a backbone exhibiting a Tg of from about 0 °C to about 50 °C.; and (ii) one or more hydrophilic grafts attached to the backbone wherein each of the grafts exhibits a Tg of from about 50 °C. to about 200 °C., and wherein the average molecular weight of each of the grafts is greater than about 1000; and (b) from about 50% to about 99.9%, based on the weight of the composition, of a suitable carrier.

US 2007/254979 relates to a dental material comprising at least one compound of Formula (I)

[PG]*ₘ-*R¹-Z-SP-Y-R²-[WG]*ₚ*

in which m=1, 2 or 3; p=1, 2 or 3; R¹=is absent, a linear or branched C1 to C20 alkylene radical which can be interrupted one or more times by O, S, NH, SiR', CONH CONR', COO and/or OCONH, a substituted or unsubstituted, aromatic C6 to C14 radical or a combination thereof; R²=is absent, a linear or branched C1 to C20 alkylene radical which can be interrupted one or more times by O, S, NH, SiR', CONH CONR', COO and/or OCONH, a substituted or unsubstituted, aromatic C6 to C14 radical or a combination thereof; PG=a radically polymerizable group; SP=a polymeric spacer which is selected from polyethylene glycol, polypropylene glycol, polyglycerol, polyalkyloxazoline, polyethyleneimine, polyacrylic acid, polymethacrylic acid, polyvinyl alcohol, polyvinyl acetate, poly-(2-hydroxyethyl)acrylate, poly-(2-hydroxyethyl)methacrylate groups, hydrophilic polypeptide groups and copolymers of the corresponding monomers; WG=antimicrobially active group; Z=is absent, O, S, an ester, amide or urethane group; Y=is absent, O, S, an ester, amide or urethane group, and which has a molecular weight of at least 1.000.

WO 2016/086014 relates to a disinfectant formulation imparting a residual biocidal property. The disinfectant formulation is used to treat a surface to impart a film having a capacity to kill bacteria and other germs for at least 24 hours after deposit of the film on a treated surface. The disinfectant formulation comprises a polymer binder, wherein the polymer binder is an oxazoline homopolymer or an extended or a modified polymer based on an oxazoline homopolymer, and a biocidal compound. The disinfectant formulation further comprises a carrier. An article having the disinfectant formulation is provided as well as methods of making, using and applying the disinfectant formulation. WO 99/35227 relates to aqueous detergent compositions, preferably hard surface cleaning compositions, which contain alkyl aryl sulfonate surfactant, selected hydrophobic cleaning solvent, polycarboxylic acid, and aqueous solvent system in solution and/or a micellar phase, the pH being from about 2 to about 4. Such compositions optionally contain additional anionic sulfate surfactant, cationic surfactant, peroxide and/or hydrophilic polymer for additional benefits. WO 2013/098547 relates to an anti-microbial composition comprising (i) an anti-microbial component comprising at least one antimicrobial quaternary ammonium compound; (ii) a hydrophilic polymer (iii) a polar solvent; (iv) at least one non-ionic surfactant and (v) a chelate; wherein the polymer comprises at least two of the following types of monomer: (1) a monomer having a permanent cationic charge or a monomer that is capable of forming a cationic charge upon protonation; (2) an acidic monomer having an anionic charge or capable of forming an anionic charge; and (3) a neutral monomer.

In summary, there remains a need for a formulation able to confer a residual biocidal activity to treated surfaces. It would be further advantageous if the formulation were combined with a surface disinfectant, to enable a single cleaning to both disinfect and impart the residual biocidal effect.

It further would be advantageous for the residual biocidal property to be durably associated with the treated surface, such that it may continue to provide microbial reduction for an extended period of time after application.

It further would be advantageous if there is a formulation(s) effective across a wide range of industries and applications.

### SUMMARY OF THE INVENTION

The present invention relates to a liquid disinfectant formulation for healthcare applications imparting a residual biocidal property. The disinfectant formulation comprising:
a polymer binder in a range of 0.5% to 5% based on the weight of the disinfectant formulation, wherein the polymer binder is an oxazoline homopolymer
wherein the oxazoline homopolymer has a structure of: 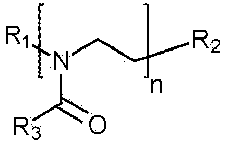 wherein
   R₁ is a hydrogen, alkyl, alkenyl, alkynyl, allyl or benzyl group;
   R₂ is an alkoxy, carboxyl, carboxyalkyl,or hydroxyl group;
   R₃ is an alkyl, aryl, or benzyl group; and
   n is in a range of 500 to 1,000,000;
   a biocidal compound in a range of 0.05% to 10% based on the weight of the disinfectant formulation, wherein the biocidal compound is a quaternary ammonium compound having a structure of: 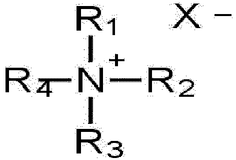 wherein
      R₁ is alkyl, alkoxy, or aryl, either with or without heteroatoms, or saturated or non-saturated;
      R₂ is alkyl, alkoxy, or aryl, either with or without heteroatoms, or saturated or non-saturated;
      R₃ is alkyl, alkoxy, or aryl, either with or without heteroatoms, or saturated or non-saturated;
      R₄ is alkyl, alkoxy, or aryl, either with or without heteroatoms, or saturated or non-saturated;
      X⁻, an anion, is halogen, sulfonate, sulfate, phosphonate, phosphate, carbonate, bicarbonate, hydroxy, or carboxylate,
      a surfactant in a range of 0.01% to 10% based on the weight of the disinfectant formulation,
      a pH adjusting agent in a range of 0.01% to 10% based on the weight of the disinfectant formulation,
      glycol ether in a range of 1% to 10% based on the weight of the disinfectant formulation, and
      water in a range of 0% to 99.9% based on the weight of the disinfectant formulation.

In another aspect of the invention other features of the disinfectant formulation(s) are provided.

In yet another aspect of the disclosure, an article having the disinfectant formulation(s) of the present invention is provided as well as methods of making, using and applying the disinfectant formulation(s).

Further areas of applicability of the present invention will become apparent from the detailed description provided hereinafter.

### DESCRIPTION OF THE PREFERRED EMBODIMENTS

The present invention has broad potential application and utility, which is contemplated to be adaptable across a wide range of industries. The following description is provided herein by way of example for purposes of providing an enabling disclosure of the invention.

As used herein, the terms "microbe" or "microbial" should be interpreted to refer to any of the microscopic organisms studied by microbiologists or found in the use environment of a treated article. Such organisms include, but are not limited to, bacteria and fungi as well as other single-celled organisms such as mold, mildew and algae. Viral particles and other infectious agents are also included in the term microbe.

"Antimicrobial" further should be understood to encompass both microbicidal and microbistatic properties. That is, the term comprehends microbe killing, leading to a reduction in number of microbes, as well as a retarding effect of microbial growth, wherein numbers may remain more or less constant (but nonetheless allowing for slight increase/decrease).

For ease of discussion, this description uses the term antimicrobial to denote a broad spectrum activity (e.g. against bacteria and fungi). When speaking of efficacy against a particular microorganism or taxonomic rank, the more focused term will be used (e.g. antifungal to denote efficacy against fungal growth in particular).

Using the above example, it should be understood that efficacy against fungi does not in any way preclude the possibility that the same antimicrobial composition may demonstrate efficacy against another class of microbes.

For example, discussion of the strong bacterial efficacy demonstrated by a disclosed embodiment should not be read to exclude that embodiment from also demonstrating antifungal activity. This method of presentation should not be interpreted as limiting the scope of the invention in any way.

### Disinfectant Formulation

The present invention is directed to the liquid disinfectant formulation for healthcare applications as defined above. The liquid disinfectant formulation comprises the biocidal compound, the polymer binder, a surfactant, a pH adjusting agent, glycol ether and water. The composition may further comprise a solvent (such a low molecular weight alcohol), a colorant, a fragrance, among other components.

The liquid composition is formulated having surface disinfection and residual biocidal properties. The formulation can be applied to a surface by spraying, rolling, fogging, wiping or other means. The formulation acts as a surface disinfectant, killing infectious microbes present on the surface.

Once dried, the liquid formulation leaves a residual protective film on the surface. The residual film possesses a biocidal property, enabling it to maintain protection of the surface against microbial contamination for an extended time period after its application.

In a preferred embodiment, the surface disinfectant formulation imparts a film with the capacity to quickly kill bacteria and other germs for at least 24 hours after deposit of the film on the treated surface. In an aspect of the invention, quick kill generally refers to a time period of about 30 seconds to about 5 minutes. The film will remain on the surface and is durable to multiple touches and wearing of the surface.

The disinfectant formulation is a liquid composition comprising the polymer binder, the biocidal compound, solvent, surfactant, a pH adjusting agent, glycol ether, water, and other optional components such as fragrances.

### Biofilm Sealant

In an embodiment of the present invention, the disinfectant formulation is a biofilm sealant. The biofilm sealant once applied to a surface forms a polymer film. The polymer film is applied wet and dries as a film layer to lock in and prevent subsequent outgrowth of biofilm microorganisms. The biofilm sealant, although preferably in the form of a liquid, may also take other forms such as a gel, or other form. Once the biofilm sealant is in place, the microbes of the biofilm have limited access to oxygen and exogenous nutrients. The biofilm sealant has the potential to seal in bacteria but also to provide extended release of antimicrobials into the film to kill the microorganisms in the biofilm.

In an embodiment of the present invention, the biofilm sealant comprises the polymer binder, the biocidal compound, and an enzyme(s). The enzyme is to assist in degrading the biofilm and provide for enhanced antimicrobial penetration by the biocidal agent and ultimately biofilm removal. Example enzymes include, but are not limited to, proteinase, DNase, RNase, and carbohydrate specific enzymes that can degrade the extracellular matrix associated with the biofilm.

In an embodiment of the present invention, the biofilm sealant comprises the polymer binder, and a mixture of bacteriophages, the biocidal compounds, enzymes and antibodies as a biological material for slow release into the film.

### Polymer Binder

In the invention, the polymer binder is an oxazoline homopolymer. As a feature of the invention, the oxazoline homopolymer has the following structure: 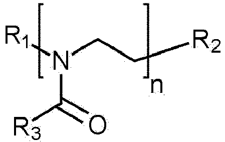 wherein
R₁ and R₂ are end groups determined by the polymerization techniques used to synthesize oxazoline homopolymer. R₁ is a hydrogen, alkyl, alkenyl, alkynyl, allyl or benzyl group;
R₂ is an alkoxy, carboxyl, carboxyalkyl,or hydroxyl group.

R₃ is an end group determined by the type of oxazoline used in the preparation of the polymer binder of this invention. R₃ is, an alkyl, aryl or benzyl group. For example, R₃ is an ethyl group if ethyloxazoline is the monomer used to prepare the polymer binder for the present invention.

n is the degree of oxazoline polymerization in the homopolymer. n is in a range of 500 to 1,000,000. Preferably, n is in a range of 500 to 250,000; most preferably, n is in a range of 2500 to 100,000.

Examples of commercially available polyethyloxazolines include, but are not limited to, Aquazol 500 from Polymer Chemistry Innovations, Inc.

The amount of polymer binder that can be used in the liquid formulation can vary somewhat depending upon desired length of residual activity of the composition and the nature of all the other components in the composition. In a liquid formulation for healthcare applications, the amount of polymer binder in the liquid formulation is in a range of 0.5% to 5%, and most preferably in a range of 0.8% to 5%.

The polymer binder preferably is water-soluble and can be readily removed from surface if any buildup is noticed. Present in small amounts, it nonetheless can provide a durable bond between biocidal compound and the treated surface to facilitate residual efficacy.

### Biocidal Compound

The biocidal compound is a quaternary ammonium compound (QAC) with the following molecular structure: 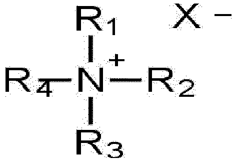 wherein
R₁, R₂, R₃, and R₄ are independently selected and include, but are not limited to, alkyl, alkoxy, or aryl, either with or without heteroatoms, or saturated or non-saturated. Some or all of the functional groups may be the same.

The corresponding anion X⁻ includes, but is not limited to, a halogen, sulfonate, sulfate, phosphonate, phosphate, carbonate/bicarbonate, hydroxy, or carboxylate.

QACs include, but are not limited to, n-alkyl dimethyl benzyl ammonium chloride, di-n-octyl dimethyl ammonium chloride, dodecyl dimethyl ammonium chloride, n-alkyl dimethyl benzyl ammonium saccharinate, and 3-(trimethoxysilyl) propyldimethyloctadecyl ammonium chloride.

Combinations of monomeric QACs are preferred to be used for the invention.

Examples of commercially available quaternary ammonium compounds include, but are not limited to, Bardac 205M and 208M from Lonza, and BTC885 from Stepan Company.

The concentration of biocidal compound in the liquid formulation for a healthcare application, preferably in a range of 0.1% to 10%, and more preferably in a range of 0.5% to 3%.

### Carrier

The carrier or media for the liquid formulation of this invention can be any solvent that is volatile and allow easy evaporation at ambient condition. Examples of liquid carriers include, but are not limited to, water and low molecular weight alcohols such as C1 to C8 alkanols. Specific examples include, but are not limited to, ethanol, isopropyl alcohol, butanol, pentanol, and combinations thereof.

Another class of solvents for use in the invention includes alkylene glycol ether. The formulation comprises glycol ether in a range of 1% to 10%. Examples include, but are not limited to, ethylene glycol monopropyl ether, ethylene glycol monobutyl ether, ethylene glycol monohexyl ether, ethylene glycol monohexyl ether, diethylene glycol monomethyl ether, diethylene glycol monoethyl ether, diethylene glycol monobutyl ether, diethylene glycol monohexyl ether, triethylene glycol monomethyl ether, triethylene glycol monoethyl ether, triethylene glycol monobutyl ether, propylene glycol methyl ether, propylene glycol methyl ether acetate, propylene glycol n-butyl ether, dipropylene glycol n-butyl ether, dipropylene glycol methyl ether, dipropylene glycol methyl ether acetate, propylene glycol n-propyl ether, dipropylene glycol n-propyl ether, and tripropylene glycol methyl ether.

Another class of solvents for use in the invention is based on terpenes and their derivatives such as terpene alcohols, terpene esters, terpene ethers, or terpene aldehydes. Examples of solvents, include but are not limited to, pine oil, lemon oil, limonene, pinene, cymene, myrcene, fenchone, borneol, nopol, cineole, ionone and the like.

If the method of the application of the liquid formulation of the present invention is pressurized aerosol, a propellant may be needed in the composition. A variety of propellants or mixtures can be used for the present invention and should be familiar to those skilled in the art. C1 to C10 hydrocarbons or halogenated hydrocarbons are typical propellants in aerosol compositions known to the industry. Examples of such propellants include, but are not limited to, pentane, butane, propane, and methane. Other types of propellants that can be used for the present invention also include compressed air, nitrogen, or carbon dioxide. Alternatively, a bag on valve package may be used to aerosol the product without directly add a propellant to the composition.

Either a single solvent or a mixture of the above solvents can be used for the present invention. The types of solvents used for the present invention may depend upon the intended uses of the residual disinfectant composition. For example, if the composition of the present invention is intended for home care use, cleaning the contaminated surfaces free of all types of dirt or soil may be of primary interest. Liquid carrier or media that assist and enhance the removal of soil may be formulation of the invention. The residual disinfectant formulation or composition of the present invention includes alkyl or multi-alkyl glycol ethers for better cleaning performance in the home care version of the formulation of the present invention. If the primary goal of the residual disinfectant composition is to be used at a health care facility where the major concern is hospital acquired infection, then quick drying of the liquid composition of the present invention may be more desirable than cleaning dirt or soil out of the surfaces. Low molecular weight alcohols should be considered to help the liquid formulation of the present invent dry fast after the application. Also, a low molecular weight alcohol in the liquid formulation will strengthen the sanitizing activity of the liquid composition.

For health care use of the residual disinfectant, a mixture of water and low molecular weight alcohol is preferred. The amount of alcohol present in the liquid formulation is preferred to be at such a level that the liquid formulation is capable of forming a zerotropic mixture between the alcohol and water. A minimum amount of alcohol, if present, in the liquid composition is 10%. Preferably, for health care use of the residual disinfectant, the alcohol concentration is 30%, and most preferably the alcohol concentration is at least 50% based on the weight of liquid formulation for the health care use of the composition of the invention.

### Surfactant

A surfactant or wetting agent is used. The surfactant assists the liquid formulation to spread and evenly coat the surface being treated. The surfactant additionally contributes to the formation of a zeotropic mixture between alcohol and water, thus facilitating a rapid and uniform drying of the liquid formulation once being applied onto surface. A surfactant also plays an important role in the residual disinfectant liquid formulation of the present invention for home care use if the soil cleaning performance is the key feature the product is designed to possess.

Surfactants appropriate for the present liquid formulation include, but are not limited to, those that are nonionic, anionic, or amphoteric in nature. Examples of commercially available wetting agents include, but are not limited to, Ecosurf SA-4 or Tergitol TMN-3 from Dow Chemical, and Q2-5211 from Dow Coming.

An amine oxide surfactant is preferred especially when the QAC is used as the biocidal compound in the formulation.

In the category of nonionic surfactants, ethoxylated alcohols with different amounts of ethylene oxides or HLB values can be used. Examples of ethoxylated alcohols include, but are not limited to, Triton X-100 (Dow Chemical, Midland MI), Ecosurf EH nonionic surfactant series from Dow Chemical, Tergitol nonionic surfactant series from Dow Chemical, the Surfonic surfactant series from Huntsman Corp., the Neodol surfactant series from Shell, the Ethox surfactant series from Ethox Chemicals and the Tomadol surfactant series from Air Products and Chemicals, Inc.

Another class of nonionic surfactants include alkylpolyglucosides. Examples include the Glucopon Series from BASF and the Ecoteric series from Huntsman.

An alternative class of surfactants that is preferred for the liquid formulation are silane-based surfactants. Examples include but, are not limited to, silicone polyethers organofunctional or reactive silane wetting agents, and fluorochemical based wetting agents.

The content of the surfactant in the liquid formulation is in a range of 0.01% to 10%, preferably in a range of 0.01% to 5%.

There is no limitation on the types of pH adjusting agents that can be added into the liquid composition of the present invention. Example of pH adjusting agents that can be used include, but are not limited to, triethanolamine, diethanolamine, monoethanolamine, sodium hydroxide, sodium carbonate, potassium hydroxide, potassium carbonate, calcium carbonate, citric acid, acetic acid, hydrochloric acid, sulfamic acid, sulfuric acid and the like.

Other than components mentioned above, additional functional components may be included in the liquid composition of the present invention. Additional components include, but are not limited to, chelants, compatibilizers, coupling agents, corrosion inhibitors, rheology modifiers, fragrances, colorants, preservatives, UV stabilizers, optical brighteners, and active ingredient indicators.

In an embodiment of the present invention, the liquid solution comprises the polymer binder, the quaternary ammonium compound, a silicone-based surfactant, and ethanol. The liquid formulation can be made or mixed by any conventional method known to one of ordinary skill in the art. There are no preferred addition procedures for the formulation of the present invention provided that the formulation is ultimately homogeneous, compatible and stable. For example, if the polymer binder is a solid, it may be preferable to first dissolve or disperse the polymer in a carrier such as water or alcohol to make a stock polymer binder liquid dispersion. The stock polymer binder liquid dispersion may be readily added into the formulation of the present invention during the mixing procedure.

### Application of Liquid Formulation

The liquid formulation may be applied by a variety of means. If sprayed, the liquid formulation advantageously may be supplied in a conventional bottle with a sprayer. The sprayer can be a trigger sprayer. As an option to a trigger sprayer, an aerosol can also be used to deliver the liquid formulation on to surfaces. Additional application means include, but are not limited to, fogging, rolling, brushing, mopping, and using a wipe by a variety of application devices. It is within the scope of the present invention that wipe products can also be made comprising or pre-treated with the disinfectant formulation(s) of the present invention, for example, for off-the-shelf sale or use.

To disinfect a contaminated surface, spray the liquid formulation until the area is completely covered. The wet formulation subsequently may be wiped dry with a dry cloth or paper towel.

The disclosure also relates to an article treated with a disinfectant formulation in accordance with aspects of the invention.

### Examples

The following examples illustrate liquid formulations made in accordance with aspects of the present invention. The testing results on these formulations demonstrate the desired residual sanitizing or disinfecting performance once being applied onto surfaces and dried. Cleaning performance is also tested on those formulations that not only provide residual disinfecting benefit but also cleaning features.

Formulations were tested for residual efficacy using the EPA 01-1A protocol. Briefly, bacteria were added to a glass slide and allowed to dry on the surface. The formulation was then sprayed onto the surface and dried to form a transparent film. Once a film had formed, the glass slide was exposed to alternating wet and dry cycles using the Gardner wear tester as described in the protocol. In between each cycle the slide was re-inoculated with bacteria. After the appropriate number of wear and re-inoculations (48 passes and 11 re-inoculations for healthcare formulation and 24 passes 5 re-inoculation for homecare formulation) the slide was exposed to bacteria for the indicated time frame (i.e. 5 minutes) followed by recovery in an appropriate neutralizing solution.

In addition to residual efficacy, initial efficacy of the composition of the present invention was also tested according to ASTM E 1153.

A modified ASTM D4488 was used to evaluate the hard surface cleaning performance for the home care composition of the present invention. A soil of the following composition was used for the evaluation.

**Table 1**

| **Components** | **Weight percentage of each component (%)** |
|---|---|
| Pure vegetable oil | 75 |
| TM-122 AATCC carpet soil | 25 |

| | |
|---|---|
| *TM-122 AATCC carpet soil was obtained from Textile Innovators | |

In the process of making a soiled ceramic tile for the cleaning test, around 2 grams of the liquid soil was placed on an aluminum foil. A roller was used to roll and spread out the soil on the foil and let the roller pick up the soil as much as possible. The soil on the roller was transferred to the glazed surface of a ceramic tile evenly by rolling the soiled roll on the ceramic surface. The soiled ceramic tile was then baked in oven set at 180C for 45 minutes. The baked tile was conditioned at room temperature for 24 hours before being used for the cleaning test.

A Gardner wear tester was used in the cleaning test. Scouring pads of around 1 cm width were attached to the abrasion boat for the wearing. Around 4 grams of test formulation was placed in a weighing boat. The attached scouring pad was dipped into the weighing boat to pick up the testing formulation.

The cleaning process started immediately after the pad is wetted with the cleaning formulation. Seven wearing cycles (back and forth) were used in the test.

### Residual disinfectant examples for healthcare

The following formulation in the comparison example uses alcohol as the major carrier in order to provide fast drying property to the liquid formulations.

**Table 2**

| Components | HE1 (wt %) | HE2 (wt %) | HE3 (wt%) |
|---|---|---|---|
| Water | balance | balance | balance |
| Ethanol | 70 | 70 | 0 |
| 2-Propanol | 0 | 0 | 70 |
| Polyethyloxazoline | 2 | 2 | 2 |
| Quaternary ammonium compound | 0.8 | 1.2 | 1.2 |
| Wetting agent/Surfactant | 0.1 | 0.1 | 0.1 |

The residual efficacy testing was conducted using EP01-1A protocol and the results are listed in the following Table.

**Table 3**

| **Formulation** | **EP01-1A (average log reduction bacterial)** |
|---|---|
| HE1 | 3.53 |
| HE2 | 5.50 |
| HE3 | 4.50 |

These formulations show excellent residual efficacy result based on EP01-1A test.

The ASTM E 1153 test protocol was also followed to assess the initial biocidal property of HE2. Test results are presented in the following table.

**Table 4**

| **Initial Efficacy** | **Time** | **Method** | |
|---|---|---|---|
| **Bacterial** | **3 log reduction** | **Complete kill (<10 CFU/PFU)** | |
| *Klebsiella pneumoniae* | 30 seconds | 1 minute | ASTM E 1153 |
| *Pseudomonas aerugniosa* | 30 seconds | 30 seconds | ASTM E 1153 |
| *Staphylococcus aureus* | 30 seconds | 30 seconds | ASTM E 1153 |
| *MRSA* | 30 seconds | 30 seconds | ASTM E 1153 |
| *VRE* | 30 seconds | 30 seconds | ASTM E 1153 |
| *Enterobacter aerogenes* | 30 seconds | 30 seconds | ASTM E 1153 |
| *Enterococcus faecalis* | 30 seconds | 1 minute | ASTM E 1153 |

| **Fungal** | | | |
|---|---|---|---|
| *Aspergillus niger* | 1 minute | 5 minutes | ASTM E 1153 |
| *Tricophyton mentagrophytes* | 1 minute | 5 minutes | ASTM E 1153 |

| **Viral** | | | |
|---|---|---|---|
| H1N1 (envelope) | 30 seconds | 30 seconds | ASTM E 1053 |
| MS2 (Non-enveloped) | 30 seconds | 5 minutes | ASTM E 1053 |
| | | | |

| **Residual Efficacy** | **Time frame of exposure** | **Log reduction** | **Method** |
|---|---|---|---|
| *Pseudomonas aerugniosa* | 5 minutes | >3 | EPA 01-1A |
| *Enterobacter aerogenes* | 5 minutes | >3 | EPA 01-1A |
| *Staphylococcus aureus* | 5 minutes | >3 | EPA 01-1A |

These data clearly demonstrate that sample surfaces treated with the exemplary liquid formulation disclosed herein possess a demonstrable biocidal activity at the indicated time frame.

### Residual disinfectant cleaner examples for homecare

These comparative compositions are formulated using water as the carrier. They are intended for a homecare use where VOC regulations prohibit most use of high levels of organic solvents such as alcohols.

**Table 5**

| **Components** | **H1 (wt%)** | **H2 (wt%)** | **H3 (wt%)** | **H4 (wt%)** | **H5 (wt%)** |
|---|---|---|---|---|---|
| Water | balance | balance | balance | balance | balance |
| EDTA tetra sodium | 0 | 0 | 0 | 0 | 0.4 |
| Polyethyloxazoline | 1 | 1 | 1 | 0.5 | 0.5 |
| Ethoxylated alcohol #1 | 0.33 | 0 | 0 | 0 | 0 |
| Ethoxylated alcohol #2 | 0 | 0 | 0.2 | 0.2 | 0.2 |
| Quaternary ammonium compound | 0.4 | 0.4 | 0.4 | 0.4 | 0.4 |
| Ethanolamine | 0.2 | 0.2 | 0.2 | 0.2 | 0.2 |
| Wetting Agent | 0.1 | 0.1 | 0.1 | 0.1 | 0.1 |

The residual efficacy of these formulations were assessed using EP01-1A protocol and the results are listed in the following Table.

**Table 6**

| **Formulation** | **EP01-1A (average log reduction bacterial)** |
|---|---|
| H1 | 3.53 |
| H2 | 5.50 |
| H3 | 5.50 |
| H4 | 4.90 |
| H5 | 3.80 |

Enterobacter aerogenes was the bacterial for H1 testing and Staphylococcus aureus was the bacteria used in the testing for the rest of the formulations.

The testing results demonstrate that the H1 to H5 all provide residual efficacy to the treated surfaces. The cleaning performance was also evaluated using the modified ASTM D4488 test method.

The testing results also clearly visually showed the formulation of present invention not only provided residual efficacy against bacterial but also good cleaning performance on soiled surfaces.

Additional formulations set forth in the Tables below were tested for home care and home cleaning applications. To solubilize the fragrance, a pre-mix is prepared containing the fragrance, quaternary ammonium compound, surfactant and glycol ether if present.

**Table 7 - Light Duty Protectant Formulations (comparative)**

| **Component** | **P1 (wt %)** | **P2 (wt %)** | **P3 (wt %)** | **P4 (wt %)** | **P5 (wt %)** | **P6 (wt %)** | **P7 (wt %)** | **P8 (wt %)** | **P9 (wt %)** | **P10 (wt %)** | **P11 (wt %)** | **P12 (wt %)** | **P13 (wt %)** | **P14 (wt %)** | **P15 (wt %)** |
|---|---|---|---|---|---|---|---|---|---|---|---|---|---|---|---|
| Polyethyloxazoline | 1.00 | 1.00 | 1.00 | 1.00 | 1.00 | 1.00 | 1.00 | 1.00 | 1.00 | 1.00 | 0.50 | 1.00 | 0.50 | 1.00 | 0.50 |
| Quaternary ammonium compound | 0.40 | 0.40 | 0.40 | 0.40 | 0.40 | 0.40 | 0.40 | 0.40 | 0.40 | 0.40 | 0.40 | 0.20 | 0.20 | 0.10 | 0.10 |
| Fragrance | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Wetting agent | 0.30 | | | | | | | | | 0.10 | 0.10 | 0.10 | 0.10 | 0.10 | 0.10 |
| Amine Oxide | | 0.30 | | | | 0.30 | 0.30 | 0.30 | 0.30 | | | | | | |
| Ethoxylated Cationic surfactant | | | 0.30 | | | | | | | | | | | | |
| Dicoco quat | | | | 0.30 | | | | | | | | | | | |
| Ethoxylated alcohol | | | | | 0.30 | | | | | | | | | | |
| Triethanolamine | | | | | | 0.50 | | | | 0.50 | 0.50 | 0.50 | 0.50 | 0.50 | 0.50 |
| NaEDTA | | | | | | | 0.10 | | | | | | | | |
| Sodium metasilicate pentahydrate | | | | | | | | 0.10 | | | | | | | |
| Sodium Carbonate | | | | | | | | | 0.10 | | | | | | |
| Water* | B | B | B | B | B | B | B | B | B | B | B | B | B | B | B |

| **Component** | **P16 (wt %)** | **P17 (wt %)** | **P18 (wt %)** | **P19 (wt %)** | **P20 (wt %)** | **P21 (wt %)** | **P22 (wt %)** | **P23 (wt %)** | **P24 (wt %)** | **P25 (wt %)** | **P26 (wt %)** | **P27 (wt %)** | **P28 (wt %)** | **P29 (wt %)** |
|---|---|---|---|---|---|---|---|---|---|---|---|---|---|---|
| Polyethyloxazoline | 1.00 | 0.50 | 1.00 | 0.50 | 1.00 | 0.50 | 1.00 | 0.50 | 1.00 | 1.00 | 1.00 | 0.50 | 0.50 | 0.50 |
| Quaternar y ammoniu m compound | 0.20 | 0.20 | 0.10 | 0.10 | 0.20 | 0.20 | 0.10 | 0.10 | 0.20 | 0.20 | 0.20 | 0.20 | 0.20 | 0.20 |
| Fragrance | 0.05 | 0.05 | 0.05 | 0.05 | 0.05 | 0.05 | 0.05 | 0.05 | 0.05 | 0.05 | 0.05 | 0.05 | 0.05 | 0.05 |
| Wetting agent | | | | | | | | | | | | | | |
| Amine Oxide | 0.30 | 0.30 | 0.30 | 0.30 | | | | | | | | | | |
| Ethoxylate d Cationic surfactant | | | | | | | | | | | | | | |
| Dicoco quat | | | | | | | | | | | | | | |
| Ethoxylate d alcohol | | | | | 0.20 | 0.20 | 0.20 | 0.20 | 0.20 | 0.20 | 0.20 | 0.20 | 0.20 | 0.20 |
| Triethanolam ine | 0.50 | 0.50 | 0.50 | 0.50 | 0.50 | 0.50 | 0.50 | 0.50 | | | | | | |
| NaEDTA | | | | | | | | | 0.10 | | | 0.10 | | |
| Sodium metasilicat e pentahydr ate | | | | | | | | | | 0.10 | | | 0.10 | |
| Sodium Carbonate | | | | | | | | | | | 0.10 | | | 0.10 |
| Water* | B | B | B | B | B | B | B | B | B | B | B | B | B | B |

| | | | | | | | | | | | | | | |
|---|---|---|---|---|---|---|---|---|---|---|---|---|---|---|
| *B means balance water | | | | | | | | | | | | | | |

**Table 8 - All Purpose Cleaner Formulations (comparative)**

| **Component** | **A1 (wt %)** | **A2 (wt %)** | **A3 (wt %)** | **A4 (wt %)** | **A5 (wt %)** | **A6 (wt %)** | **A7 (wt %)** | **A8 (wt %)** | **A9 (wt %)** | **A10 (wt %)** | **A11 (wt %)** | **A12 (wt %)** | **A13 (wt %)** | **A14 (wt %)** | **A15 (wt %)** |
|---|---|---|---|---|---|---|---|---|---|---|---|---|---|---|---|
| Polyethyloxazoline | 1.00 | 1.00 | 1.00 | 1.00 | 1.00 | 1.00 | 1.00 | 1.00 | 1.00 | 1.00 | 1.00 | 1.20 | 1.00 | 1.20 | 1.00 |
| Quaternary ammonium compound | 0.40 | 0.40 | 0.40 | 0.40 | 0.40 | 0.40 | 0.40 | 0.40 | 0.40 | 0.40 | 0.50 | 0.50 | 0.40 | 0.80 | 0.40 |
| Fragrance | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 |
| Amine Oxide | | 0.90 | 0.90 | 0.90 | 0.90 | 0.90 | 0.90 | 0.90 | 0.60 | 0.45 | 0.45 | 0.60 | 0.60 | 0.60 | 0.45 |
| Ethoxylated Alcohol 1 | 0.50 | | | | | | | | | | | | | | |
| Ethoxylated Alcohol 2 | | | | | | | | | | | | | | | |
| Alkyl-polyalucoside | | | | | | | | | | | | | | | |
| Triethanolamine | | | | | | | | 1.0 | | | | | | | |
| Glycol Ether 1 | | | | | | | | | | | | | | | 500 |
| Glycol Ether 2 | | | | | | | | | | | | | | | |
| NaEDTA | | | 0.40 | | | | | | | | | | | | |
| Sodium metasilicate pentahydrate | | | | 0.10 | | | | | 0.25 | 0.25 | 0.25 | 0.10 | 0.10 | 0.10 | 0.10 |
| Sodium Carbonate | | | | | 0.10 | | | | | | | | | | |
| STPP | | | | | | 0.10 | | | | | | | | | |
| TKPP | | | | | | | 0.10 | | | | | | | | |
| Water* | B | B | B | B | B | B | B | B | B | B | B | B | B | B | B |

| **Component** | **A16 (wt %)** | **A17 (wt %)** | **A18 (wt %)** | **A19 (wt %)** | **A20 (wt %)** | **A21 (wt %)** | **A22 (wt %)** | **A23 (wt %)** |
|---|---|---|---|---|---|---|---|---|
| Polyethyloxazoline | 1.0 | 0.80 | 0.80 | 1.0 | 1.00 | 1.20 | 1.00 | 1.00 |
| Quaternary ammonium compound | 0.80 | 0.50 | 0.50 | 0.50 | 0.50 | 0.50 | 0.50 | 0.50 |
| Fragrance | 0.10 | 0.10 | 0.10 | 0.10 | 0.10 | 0.10 | 0.10 | 0.10 |
| Amine Oxide | 0.60 | 0.60 | 0.60 | 1.50 | 1.20 | 0.60 | | |
| Ethoxylated Alcohol 1 | | | | | | | | 0.10 |
| Ethoxylated Alcohol 2 | | | | | | | | |
| Alkyl-polyolucoside | | | | | | | 0.60 | 0.50 |
| Triethanolamine | | | | 0.50 | | | | |
| Glycol Ether 1 | | | 5.00 | | | | | |
| Glycol Ether 2 | | | | | | | | |
| NaEDTA | | | | | | | | |
| Sodium metasilicate pentahydrate | 0.10 | 0.10 | | | | | 0.05 | 0.05 |
| Sodium Carbonate | | | | | | | | |
| STPP | | | | | | | | |
| TKPP | | | | | | | | |
| Water* | B | B | B | B | B | B | B | B |

| **Component** | **A24 (wt %)** | **A25 (wt %)** | **A26 (wt %)** | **A27 (wt %)** | **A28 (wt %)** | **A29 (wt %)** | **A30 (wt %)** | **A31 (wt %)** | **A32 (wt %)** |
|---|---|---|---|---|---|---|---|---|---|
| Polyethyloxazoline | 1.00 | 1.00 | 1.00 | 1.00 | 1.00 | 1.00 | 1.00 | 1.00 | 1.00 |
| Quaternary ammonium compound | 0.50 | 0.50 | 0.50 | 0.50 | 0.50 | 0.50 | 0.50 | 0.50 | 0.50 |
| Fragrance | 0.10 | 0.10 | 0.10 | 0.10 | 0.10 | 0.10 | 0.10 | 0.10 | 0.10 |
| Amine Oxide | | | | | | | 0.60 | | |
| Ethoxylated Alcohol 1 | | 0.20 | | | 0.60 | 0.60 | | 0.80 | |
| Ethoxylated Alcohol 2 | 0.10 | | 0.20 | 0.20 | | | | | 0.80 |
| Alkyl-polyglucoside | 0.50 | 0.40 | 0.40 | 0.40 | | | | | |
| Triethanolamine | | | | 0.50 | 0.50 | 0.50 | 0.50 | 0.50 | 0.50 |
| Glycol Ether 1 | | | | | 2.40 | | | 2.40 | |
| Glycol Ether 2 | | | | | | 2.40 | 2.40 | | 2.40 |
| NaEDTA | | | | | | | | | |
| Sodium metasilicate pentahydrate | 0.05 | 0.05 | 0.05 | | | | | | |
| Sodium Carbonate | | | | | | | | | |
| STPP | | | | | | | | | |
| TKPP | | | | | | | | | |
| Water* | B | B | B | B | B | B | B | B | B |

**Table 9 - Bathroom Cleaner Formulations (comparative)**

| **Component** | **B1 (wt %)** | **B2 (wt %)** | **B3 (wt %)** | **B4 (wt %)** | **B5 (wt %)** | **B6 (wt %)** | **B7 (wt %)** | **B8 (wt %)** | **B9 (wt %)** | **B10 (wt %)** | **B11 (wt %)** | **B12 (wt %)** | **B13 (wt %)** | **B14 (wt %)** |
|---|---|---|---|---|---|---|---|---|---|---|---|---|---|---|
| Polyethyloxazoline | 1.00 | 1.00 | 1.00 | 1.00 | 1.00 | 1.00 | 1.00 | 1.00 | 1.00 | 1.00 | 1.00 | 1.00 | 1.00 | 1.00 |
| Quaternary ammonium compound | 0.20 | 0.20 | 0.20 | 0.20 | 0.20 | 0.20 | 0.20 | 0.20 | 0.20 | 0.20 | 0.20 | 0.20 | 0.20 | 0.20 |
| Fragrance | 0.10 | 0.10 | 0.10 | 0.10 | 0.10 | 0.10 | 0.10 | 0.10 | 0.10 | 0.10 | 0.10 | 0.10 | 0.10 | 0.10 |
| Amine Oxide | 0.84 | | 0.42 | 0.84 | | 0.42 | 0.84 | | 0.42 | 0.84 | | 0.42 | 0.84 | |
| Ethoxylated alcohol 1 | | 0.84 | | | 0.84 | | | 0.84 | | | 0.84 | | | 0.84 |
| Ethoxylated alcohol 2 | | | 0.50 | | | 0.50 | | | 0.50 | | | 0.50 | | |
| Glycol Ether | | | | 4.00 | 4.00 | 4.00 | | | | 4.00 | 4.00 | 4.00 | 4.00 | 4.00 |
| NaEDTA | 2.90 | 2.90 | 2.90 | 2.90 | 2.90 | 2.90 | | | | | | | | |
| Citric Acid | | | | | | | 2.50 | 2.50 | 2.50 | 2.50 | 2.50 | 2.50 | | |
| Sulfamic Acid | | | | | | | | | | | | | 2.50 | 2.50 |
| Water* | B | B | B | B | B | B | B | B | B | B | B | B | B | B |

| **Compone nt** | **B15 (wt %)** | **B16 (wt %)** | **B17 (wt %)** | **B18 (wt %)** | **B19 (wt %)** | **B20 (wt %)** | **B21 (wt %)** | **B22 (wt %)** | **B23 (wt %)** | **B24 (wt %)** |
|---|---|---|---|---|---|---|---|---|---|---|
| Polyethyloxazoline | 1.00 | 1.00 | 1.00 | 1.00 | 1.00 | 1.00 | 1.00 | 1.00 | 1.00 | 1.00 |
| Quaternary ammonium compound | 0.20 | 0.80 | 0.80 | 0.80 | 0.80 | 0.80 | 0.80 | 0.80 | 0.80 | 0.80 |
| Fragrance | 0.10 | 0.10 | 0.10 | 0.10 | 0.10 | 0.10 | 0.10 | 0.10 | 0.10 | 0.10 |
| Amine Oxide | 0.42 | 0.80 | | 0.40 | 0.80 | | 0.40 | 0.80 | | 0.40 |
| Ethoxylate d alcohol 1 | | | 0.80 | | | 0.80 | | | 0.80 | |
| Ethoxylate d alcohol 2 | 0.50 | | | 0.50 | | | 0.50 | | | 0.50 |
| Glycol Ether | 4.00 | | | | | | 4.0 | 4.0 | 4.0 | 4.0 |
| NaEDTA | | | | | | | | | | |
| Citric Acid | | 2.50 | 2.50 | 2.50 | 2.50 | 2.50 | 2.50 | | | |
| Sulfamic | 2.50 | | | | | | | 2.50 | 2.50 | 2.50 |
| Acid | | | | | | | | | | |
| Water* | B | B | B | B | B | B | B | B | B | B |

A concentrate of a water based formulation is prepared by removing a portion of the water from the formulation, concentrating the remaining raw materials. The resulting concentrate can then be diluted back to use strength prior to use. The 5 times and 10 times concentrates are typically used in the janitorial and sanitization supply industries with customers in the hospitality area. Concentrates are desirable in these industries as it reduces shipping costs and conserves storage space. Table 10 illustrates example concentrate formulations in an embodiment of the invention.

**Table 10 - Concentrate Formulations (comparative)**

| Component | Protectant 5X | Protectant 10X | All Purpose Cleaner 5X | All Purpose Cleaner 10X | Bathroom Cleaner 5X | Bathroom Cleaner 10X |
|---|---|---|---|---|---|---|
| Polyethyloxazoline | 5.0 | 10 | 5.0 | 10 | 5.0 | 10 |
| Quaternary ammonium compound | 1.0 | 2.0 | 2.5 | 5.0 | 1.6 | 3.2 |
| Fragrance | 0.25 | 0.50 | 0.5 | 1.0 | 0.75 | 1.5 |
| Surfactant | 0.50 | 1.0 | 4.0 | 8.0 | 3.0 | 6.0 |
| Glycol Ether | | | 12.5 | 25 | | |
| TEA | 2.5 | 5.0 | | | | |
| Citric Acid | | | | | 12.5 | 25 |
| Water* | B | B | B | B | B | B |

### Comparative Example

Multiple polymeric compounds were tested for the capability to provide persistent bioburden reduction utilizing the EPA 01-1A protocol against *Enterobacter aerogenes.* 50 microL of each formulation was allowed to dry on glass carriers before being subjected to the test. Each test was conducted in the presence of 5% FBS. As noted in Table 11, the combination of polyoxazoline and quaternary ammonium provided a synergistic residual sanitizing benefit.

**Table 11**

| | Formula 1 | Formula 2 | Formula 3 | Formula 4 | Formula 5 |
|---|---|---|---|---|---|
| Active Ingredient | Quaternary Ammonium Blend | Quaternary Ammonium blend | Quaternary Ammonium blend | Quaternary Ammonium blend | Quaternary Ammonium blend |
| Polymer | 3 Glycidoxypropyltrimethoxysilane | Trimethoxysilylpropyl (Polyethyleneimine) SSP-060 | acrylic emulsion | polyamide resin | polyoxazoline |
| Aesthetics | Hazy film | Tacky film when dry | Clear, non tacky film | clear, non tacky film | Clear, non tacky film |
| Associated Log Reduction | NT* | NT* | 0.5 log reduction | 1.8 log reduction | 5 log reduction |

| | | | | | |
|---|---|---|---|---|---|
| * indicates not tested due to poor aesthetics | | | | | |

## Claims

1. A liquid disinfectant formulation for healthcare applications comprising:
a polymer binder in a range of 0.5% to 5% based on the weight of the disinfectant formulation, wherein the polymer binder is an oxazoline homopolymer, wherein the oxazoline homopolymer has a structure of: 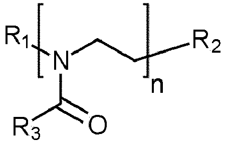 wherein
R₁ is a hydrogen, alkyl, alkenyl, alkynyl, allyl or benzyl group;
R₂ is an alkoxy, carboxyl, carboxyalkyl, or hydroxyl group;
R₃ is an alkyl, aryl, or benzyl group; and
n is in a range of 500 to 1,000,000
a biocidal compound in a range of 0.05% to 10% based on the weight of the disinfectant formulation, wherein the biocidal compound is a quaternary ammonium compound having a structure of: 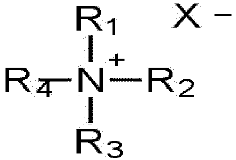 wherein
R₁ is alkyl, alkoxy, or aryl, either with or without heteroatoms, or saturated or non-saturated;
R₂ is alkyl, alkoxy, or aryl, either with or without heteroatoms, or saturated or non-saturated;
R₃ is alkyl, alkoxy, or aryl, either with or without heteroatoms, or saturated or non-saturated;
R₄ is alkyl, alkoxy, or aryl, either with or without heteroatoms, or saturated or non-saturated;
X⁻, an anion, is halogen, sulfonate, sulfate, phosphonate, phosphate, carbonate, bicarbonate, hydroxy, or carboxylate,
a surfactant in a range of 0.01% to 10% based on the weight of the disinfectant formulation,
a pH adjusting agent in a range of 0.01% to 10% based on the weight of the disinfectant formulation,
glycol ether in a range of 1% to 10% based on the weight of the disinfectant formulation, and
water in a range of 0% to 99.9% based on the weight of the disinfectant formulation.

2. The disinfectant formulation according to claim 1, wherein the polymer binder is prepared with a monomer of ethyloxazoline.

3. The disinfectant formulation according to claim 1, wherein the surfactant is nonionic.

4. The disinfectant formulation according to claim 3, wherein the nonionic surfactant is an ethoxylated alcohol.

5. The disinfectant formulation according to claim 1, wherein the surfactant is an amine oxide.

6. The disinfectant formulation according to claim 1, wherein the quaternary ammonium compound is selected from the group consisting of n-alkyl dimethyl benzyl ammonium chloride, di-n-octyl dimethyl ammonium chloride, dodecyl dimethyl ammonium chloride, n-alkyl dimethyl benzyl ammonium saccharinate, 3-(trimethoxysilyl) propyldimethyloctadecyl ammonium chloride, and a combination thereof.

## Patentansprüche

1. Flüssige Desinfektionsmittelformulierung für Anwendungen im Gesundheitswesen, umfassend:
ein polymeres Bindemittel in einer Menge von 0,5 % bis 5 %, bezogen auf das Gewicht der Desinfektionsmittelformulierung, wobei das polymere Bindemittel ein Oxazolin-Homopolymer ist, und das Oxazolin-Homopolymer eine Struktur hat wie folgt: 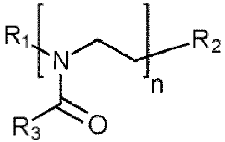 wobei
R₁ ein Wasserstoff, eine Alkyl-, Alkenyl-, Alkinyl-, Allyl- oder Benzylgruppe ist;
R₂ eine Alkoxy-, Carboxyl-, Carboxyalkyl- oder Hydroxylgruppe ist;
R₃ eine Alkyl-, Aryl- oder Benzylgruppe ist; und
n in einem Bereich von 500 bis 1.000.000 liegt;
eine biozide Verbindung in einer Menge von 0,05 % bis 10 %, bezogen auf das Gewicht der Desinfektionsmittelformulierung, wobei die biozide Verbindung eine quaternäre Ammoniumverbindung mit einer Struktur ist wie folgt: 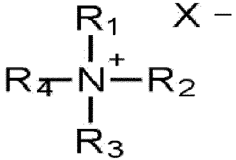 wobei
R₁ Alkyl, Alkoxy oder Aryl ist, mit oder ohne Heteroatome, oder gesättigt oder ungesättigt;
R₂ Alkyl, Alkoxy oder Aryl ist, mit oder ohne Heteroatome, oder gesättigt oder ungesättigt;
R₃ Alkyl, Alkoxy oder Aryl ist, mit oder ohne Heteroatome, oder gesättigt oder nicht gesättigt;
R₄ Alkyl, Alkoxy oder Aryl ist, mit oder ohne Heteroatome, oder gesättigt oder ungesättigt;
X-, ein Anion, Halogen, Sulfonat, Sulfat, Phosphonat, Phosphat, Carbonat, Bicarbonat, Hydroxy oder Carboxylat ist,
ein Tensid in einer Menge von 0,01 % bis 10 %, bezogen auf das Gewicht der Desinfektionsmittelformulierung,
ein Mittel zur Einstellung des pH-Wertes in einer Menge von 0,01 % bis 10 %, bezogen auf das Gewicht der Desinfektionsmittelformulierung,
Glykolether in einer Menge von 1 % bis 10 %, bezogen auf das Gewicht der Desinfektionsmittelformulierung, und
Wasser in einer Menge von 0 % bis 99,9 %, bezogen auf das Gewicht der Desinfektionsmittelformulierung.

2. Desinfektionsmittelformulierung nach Anspruch 1, bei der das polymere Bindemittel mit einem Monomer von Ethyloxazolin hergestellt ist.

3. Desinfektionsmittelformulierung nach Anspruch 1, bei der das Tensid nichtionisch ist.

4. Desinfektionsmittelformulierung nach Anspruch 3, bei der das nichtionische Tensid ein ethoxylierter Alkohol ist.

5. Desinfektionsmittelformulierung nach Anspruch 1, bei der das Tensid ein Aminoxid ist.

6. Desinfektionsmittelformulierung nach Anspruch 1, bei der die quaternäre Ammoniumverbindung ausgewählt ist aus der Gruppe bestehend aus n-Alkyldimethylbenzylammoniumchlorid, Di-n-octyldimethylammoniumchlorid, Dodecyldimethylammoniumchlorid, n-Alkyldimethylbenzylammoniumsaccharinat, 3-(Trimethoxysilyl)propyldimethyloctadecylammoniumchlorid und einer Kombination davon.

## Revendications

1. Formulation désinfectante liquide pour applications de soins de santé comprenant :
un liant polymère dans une plage de 0,5 % à 5 % sur la base du poids de la formulation désinfectante, dans laquelle le liant polymère est un homopolymère d'oxazoline, dans laquelle la structure de l'homopolymère d'oxazoline est : 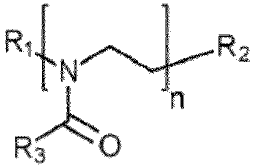 dans laquelle
R₁ est un hydrogène, ou un groupe alkyle, alcényle, alcynyle, allyle ou benzyle ;
R₂ est un groupe alcoxy, carboxyle, carboxyalkyle ou hydroxyle ;
R₃ est un groupe alkyle, aryle ou benzyle ; et
n est dans une plage de 500 à 1 000 000
un composé biocide dans une plage de 0,05 % à 10 % sur la base du poids de la formulation désinfectante, dans laquelle le composé biocide est un composé d'ammonium quaternaire dont la structure est : 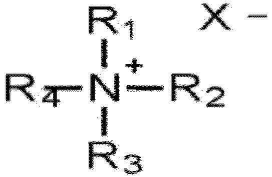 dans laquelle
R₁ est un alkyle, un alcoxy ou un aryle, avec ou sans hétéroatomes, ou saturé ou non saturé ;
R₂ est un alkyle, un alcoxy ou un aryle, avec ou sans hétéroatomes, ou saturé ou non saturé ;
R₃ est un alkyle, un alcoxy ou un aryle, avec ou sans hétéroatomes, ou saturé ou non saturé ;
R₄ est un alkyle, un alcoxy ou un aryle, avec ou sans hétéroatomes, ou saturé ou non saturé ;
X⁻, un anion, est un halogène, un sulfonate, un sulfate, un phosphonate, un phosphate, un carbonate, un bicarbonate, un hydroxy ou un carboxylate,
un tensioactif dans une plage de 0,01 % à 10 % sur la base du poids de la formulation désinfectante,
un agent d'ajustement de pH dans une plage de 0,01 % à 10 % sur la base du poids de la formulation désinfectante,
un éther de glycol dans une plage de 1 % à 10 % sur la base du poids de la formulation désinfectante, et
de l'eau dans une plage de 0 % à 99,9 % sur la base du poids de la formulation désinfectante.

2. Formulation désinfectante selon la revendication 1, dans laquelle le liant polymère est préparé avec un monomère d'éthyloxazoline.

3. Formulation désinfectante selon la revendication 1, dans laquelle le tensioactif est non ionique.

4. Formulation désinfectante selon la revendication 3, dans laquelle le tensioactif non ionique est un alcool éthoxylé.

5. Formulation désinfectante selon la revendication 1, dans laquelle le tensioactif est un oxyde d'amine.

6. Formulation désinfectante selon la revendication 1, dans laquelle le composé d'ammonium quaternaire est sélectionné dans le groupe consistant en un chlorure de n-alkyldiméthylbenzylammonium, le chlorure de di-n-octyl-diméthylammonium, le chlorure de dodécyldiméthylammonium, un saccharinate de n-alkyldiméthylbenzylammonium, le chlorure de 3-(triméthoxysilyle)propyldiméthyloctadécylammonium, et une combinaison de ceux-ci.
